# EUROPEAN PATENT SPECIFICATION

(11) **EP 3 623 142 B1**
(45) Date of publication and mention of the grant of the patent: **28.07.2021**
(21) Application number: 19191411.8
(22) Date of filing: 13.08.2019
(51) Int. Cl.: B29D 30/02, B29D 30/00, B60C 7/10, B60C 7/14

(54) **WHEEL AND TIRE ASSEMBLY AND METHOD FOR PRETENSIONING PART OF A WHEEL AND TIRE ASSEMBLY**
RAD- UND REIFENANORDNUNG UND VERFAHREN ZUM VORSPANNEN EINES TEILS EINER RAD- UND REIFENANORDNUNG
ENSEMBLE ROUE ET PNEU ET PROCÉDÉ DE PRÉTENSION D'UNE PARTIE D'UN ENSEMBLE ROUE ET PNEU

(30) Priority: 20.08.2018 US 201816105242
(43) Date of publication of application: 18.03.2020
(73) Proprietor: The Goodyear Tire & Rubber Company, Akron, OH 44316 (US)
(72) Inventor: CELIK, Ceyhan, Stow, OH 44224 (US)
(74) Representative: Kutsch, Bernd

(56) References cited:
- WO-A1-2017/116481
- CH-A- 415 032
- FR-A1- 3 045 462
- US-A1- 2010 212 797

## Description

### Field of the Invention

The present invention generally relates to laminated products or products made of several layers or bands of planar or non-planar form, which are joined together. The present invention relates, more particularly, to resilient (flexible) wheels and tires for motor vehicles.

### Background of the Present Invention

Conventional non-pneumatic tires, when associated with any rigid mechanical element intended to provide a connection between the non-pneumatic tire and a wheel, have in some cases replaced the pneumatic tire, rim and disc utilized with many vehicles.

A conventional non-pneumatic tire may be structurally supported without pressurized gas. The non-pneumatic tire may include a reinforced annular band supporting the load on the tire and a plurality of support elements or spokes having relatively low stiffness in compression and operate in tension to transmit forces between the annular band and a wheel of the vehicle.

Such an annular band, or shear band, may include two membranes formed from essentially inextensible cords coated with natural or synthetic rubber. The membranes may be separated by a shear layer itself made of rubber. The operating principle of such a shear band may be that a shear modulus of the shear layer may be substantially lower than a tensile modulus of the two membranes. The shear layer may be sufficient, however, to correctly transmit forces from one membrane to the other membrane thus allowing the shear band to work in a shear mode.

The conventional shear band thereby operate in severe or harsh conditions with essentially no risk of puncture and without any pressure maintenance requirement. Moreover, compared with the non-pneumatic tires of the prior art, a ground contact pressure which is more uniformly distributed, hence better working of the tire, an improved road holding and improved wear resistance are obtained here.

However, such a rubber shear band is not without drawbacks.

Firstly, at the customary operating temperatures, for example between -30°C and +40°C, it is relatively hysteretic, that is to say that some of the energy supplied for rolling is dissipated (lost) in the form of heat. Next, for significantly lower operating temperatures, such as those that can be found, for example in geographical areas of polar type, typically below -50°C or even less, it is well known that rubber rapidly becomes brittle, frangible and therefore unusable. Under such extreme conditions, it is moreover understood that temperature fluctuations that are more or less sizable and rapid, combined, for example, with relatively high mechanical stresses, could also lead to adhesion problems between the two membranes and the shear layer, with a risk of localized buckling of the shear band level with the membranes and endurance that is in the end degraded.

FR3045462 A describes a wheel and tire assembly in accordance with the preamble of claim 1.

### Summary of the Invention

The invention relates to an assembly in accordance with claim 1 and to a method in accordance with claim 3.

Dependent claims refer to preferred embodiments of the invention.

A system in accordance with one aspect of the present invention pretensions part of a wheel and tire assembly. The system includes a plurality of support elements for supporting part of a load of a vehicle and an annular shear band extending circumferentially around the support elements. The band has a radially inner circumferential membrane, a radially outer circumferential membrane, and a shear layer interconnecting the inner membrane and the outer membrane. The shear layer has a structure pretensioned prior to installation of the assembly on a vehicle.

According to a preferred aspect of the invention, the shear layer is pretensioned during a curing step.

According to another preferred aspect of the invention, the shear layer is pretensioned by an incompressible fluid.

According to yet another preferred aspect of the invention, the shear layer is pretensioned by an incompressible fluid during a curing step.

According to yet another preferred aspect of the invention, the shear layer is fluid sealed.

According to yet another preferred aspect of the invention, the shear layer is pretensioned by water.

According to yet another preferred aspect of the invention, the shear layer is pretensioned by pressurized water.

According to yet another preferred aspect of the invention, the shear layer is pretensioned by oil.

According to yet another preferred aspect of the invention, the shear layer is pretensioned by pressurized oil.

According to yet another preferred aspect of the invention, the shear layer is pretensioned by heated and pressurized oil.

A method in accordance with one aspect of the present invention pretensions part of a wheel and tire assembly. The method includes the steps of: supporting part of a load of a vehicle by a structure; extending an annular shear band circumferentially around the structure; interconnecting a radially inner circumferential membrane and a radially outer circumferential membrane by the annular shear layer; and pretensioning the annular shear layer prior to installation of the assembly on a vehicle.

### Definitions

The following definitions are controlling for this patent application.

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Non-pneumatic" means a lack of pressurized inflation gases, such as air, in order to assume a functional or usable form.

"Radial" and "radially" means directions radially toward or away from the axis of rotation of the tire.

### Brief Description of the Drawings

A detailed description and examples of the present invention are presented in connection with the Figures relating to these examples, which schematically show (without a specific scale):
FIG. 1 schematically shows a side view of a wheel and tire assembly in accordance with the present invention;
FIG. 2 schematically shows part of one example constituent component of the assembly of FIG. 1;
FIG. 3 schematically shows an alternative structure of the component of FIG. 2;
FIG. 4 schematically shows another alternative structure of the component of FIG. 2;
FIG. 5 schematically shows still another alternative structure of the component of FIG. 2; and
FIG. 6 schematically shows yet another alternative structure of the component of FIG. 2.

### Detailed Description of Example Embodiments of the Present Invention

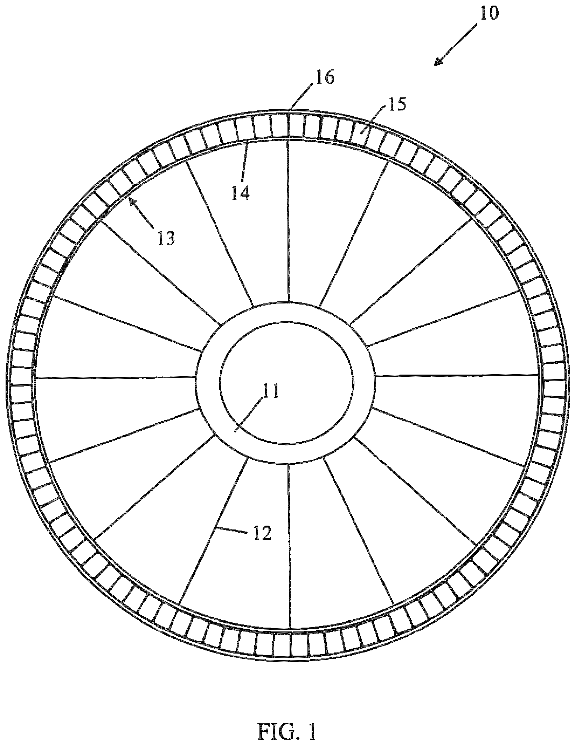

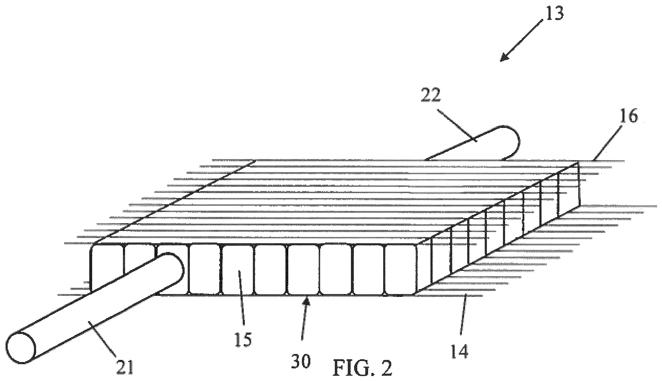

By way of example, FIG. 1 schematically represents a side view (e.g., in a plane perpendicular to an axis of rotation) of a pneumatic or a non-pneumatic resilient wheel and tire assembly 10 structurally supported (e.g., by a load-bearing structure) by a circumferential shear band 13 of which comprises a lattice structure (FIG. 2).

The example assembly 10 may comprises a hub 11, an annular band referred to as a shear band 13, which includes at least one inner circumferential membrane 14 and one outer circumferential membrane 16 that are oriented in the circumferential direction, and a plurality of support elements or spokes 12 that preferably connect the hub 11 to the inner circumferential membrane 14. The two membranes 14, 16 are interconnected by a layer 15 of preferably partially closed cells (FIG. 2). The layer 15 preferably defines a three-dimensional closed chamber which may be filled and pressurized with an incompressible fluid (e.g., water, oil, etc.) during tire building and curing. Thereafter, the fluid may be drained thereby pretensioning the connecting structures of the closed chamber. The presence of the fluid may also accelerate heating and cooling of the shear band 13 during and after curing.

The membranes 14, 16 may be formed with liquid sealing film and the sides of the layer 15 may be temporarily and/or permanently sealed such that the liquid is contained appropriately during curing of the tire. A fill tube 21 may be attached to a side of the layer 15 for introducing the fluid into the closed chamber. A vent tube 22 may be attached to a side of the layer 15 at another location to vent air until the closed chamber is filled with the liquid. on all fabric surfaces and placing tubing on sides to a pressurizing fluid. The sides of the layer 15 may be reinforced (e.g., fabric, rubber, etc.) to improve structural integrity against an inner pressurizing force of the liquid during curing. Curing may pressurize the fluid or the fluid may also be additionally pressurized before curing.

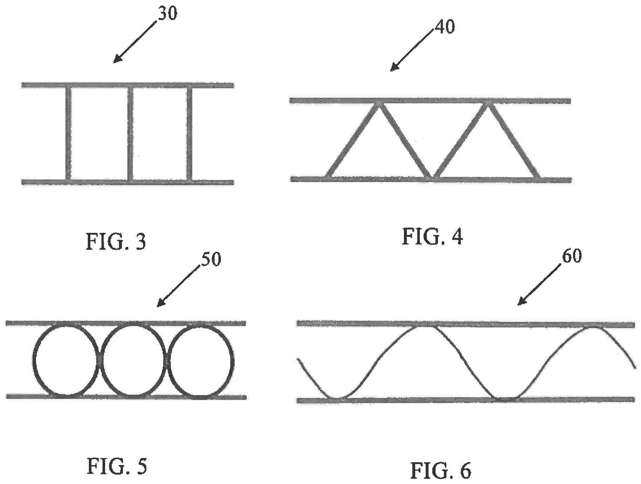

The shear band 13 may further include a resorcinol-formaldehyde latex or a similar adhesive coating for bonding of the shear layer to other structures of the tire. The layer 15 may be constructed from continuous cells separated by fabric walls with openings fluid transfer between the continuous cells. FIGS. 2 & 3 show one example orthogonal, or I-beam, cell structure 30. FIG. 4 shows another example triangular cell structure 40. FIG. 5 shows still another example cylindrical cell structure 50. FIG. 6 shows yet another example wavy or sinusoidal cell structure 60.

The shear band 13 may be held together and secured to the spokes 12 by heat sealing, by adhesive binding, and/or by other suitable means. The sealing layer of the membranes 14, 16 may be made from suitable laminated sheet plastic, such as polyethylene terephthalate. Other similar flexible coverings, such as vinyl and/or leather, may be used to dispose the layer 15 on the two membranes 14, 16.

One example adhesive may be RFL (resorcinol-formaldehyde-latex). An RFL adhesive may include a polymer latex which may be based on natural rubber, styrene-butadiene rubber, acrylonitrile-butadiene rubber (NBR), hydrogenated acrylonitrile-butadiene rubber (HNBR) and vinyl pyridine. An optional ingredient to the RFL may be an isocyanate compound. Additional examples of suitable adhesives may be polyvinyl acetate, polyacrylic, polyvinyl chloride and polyurethane. Cement solutions (organic) of polymers may also be used as an adhesive. Representative polymers may include natural rubber, polychloroprene, acrylonitrile-butadiene copolymers, polyisoprene, zinc salts of unsaturated carboxylic acid ester grafted hydrogenated nitrile butadiene elastomers, styrene-butadiene rubbers, polybutadiene, EPDM, hydrogenated acrylonitrile-butadiene copolymers, polyurethane and ethylene-acrylic elastomers.

The adhesive may be first applied to the membranes 14, 16 and the layer 15 may be thereafter applied. The adhesive may be applied to the membranes 14, 16 either before or after being adhered to the layer 15.

There may be many methods for applying adhesive. The adhesive may be applied with a knife, reverse roll or roll-over-platform coaters. Engraved rolls, spray applicators, and/or rotary screen printers may also be used. Other examples may include silk-screen, dipping, brushing, and/or spraying. The thickness of the adhesive may vary, such as from 0.05 mm to 1.0 mm, or from 0.05 mm to 0.40 mm.

The layer 15 may be applied to the plies or membranes 14, 16 and thereafter applied to the membranes 14, 16. The layer 15 may be applied to an adhesive-coated surface either mechanically, electrostatically, and/or by means of a combination of both techniques.

While present exemplary examples of the present invention and methods of practicing the same have been illustrated and described, it will be recognized that this invention may be otherwise variously embodied and practiced within the scope of the following claims. Other similar flexible coverings, such as vinyl and/or leather, may be used with the on the two membranes 14, 16.

This layer 15, or deformable cellular structure, may thus be used as a non-planar elastic beam, may exhibit a high resistance to flexural/compressive stresses and a high endurance to alternated stresses or cyclic-loading. The layer 15 may generate a deformation comparable to shear between its two membranes 14, 16 under the action of various tensile, flexural and/or compressive stresses incurred by the structure during rotation of the assembly 10 under load. The annular shear band may thus have a high deformation potential in a purely elastic domain. The structure 15 may be durable and exhibit purely elastic behavior up to rupture. This property may also apply to the membranes 14, 16 when the membranes are themselves made from a composite material (e.g., fibers/resin). Compared with a metal shear band, the shear band 13 may be more durable, substantially lighter, and/or corrosion resistant.

The two membranes 14, 16 may be constructed of a material other than that of the layer 15, such as metal, polymer, fabric, wrapped cord, etc. The membranes 14,16 themselves may thereby be composites comprising fibers embedded in a resin or rubber matrix. Thus, the whole of the annular shear band 13, constituted by the two membranes 14, 16 and the layer 15, may be constructed of a composite material. Further, fibers/wires of the membranes 14, 16 may be continuous, unidirectional, and/or oriented parallel to the circumferential direction so that the membranes have a maximum tensile strength in the circumferential direction.

The assembly 10 of the present invention may be used in all types of land based or non-land based vehicles and, in particular, vehicles intended to face severe or harsh rolling conditions or extreme temperatures, such as those which could be encountered, for example, by lunar rover vehicles, road transport vehicles, off-road vehicles and/or any other type of transport or handling vehicles.

## Claims

1. A wheel and tire assembly, the assembly (10) comprising a plurality of support elements (12) for supporting part of a load of a vehicle and an annular shear band (13) extending circumferentially around the support elements (12), the shear band (13) having a radially inner circumferential membrane (14), a radially outer circumferential membrane (16), and a shear layer (15) interconnecting the inner membrane (14) and the outer membrane (16), **characterized in that** the shear layer (15) has a structure pretensioned prior to installation of the assembly on a vehicle.

2. The assembly as set forth in claim 1 wherein the shear layer (15) is fluid sealed.

3. A method for pretensioning part of a wheel and tire assembly, the method comprising:
supporting part of a load of a vehicle by a structure;
extending an annular shear band (13) circumferentially around the structure;
interconnecting a radially inner circumferential membrane (14) and a radially outer circumferential membrane (16) by an annular shear layer (15); and
pretensioning the annular shear layer (15) prior to installation of the assembly (10) on a vehicle.

4. The method as set forth in claim 3 wherein the pretensioning step includes a curing step.

5. The method as set forth in claim 3 or 4 wherein the pretensioning step includes using an incompressible fluid.

6. The method as set forth in claim 3, 4 or 5 wherein the pretensioning step includes fluid sealing the annular shear layer (15).

7. The method as set forth in at least one of the claims 3 to 6 wherein the pretensioning step includes water or pressurizing water.

8. The method as set forth in at least one of the claims 3 to 6 wherein the pretensioning step includes oil or pressurizing oil.

9. The method as set forth in at least one of the claims 3 to 6 wherein the pretensioning step includes heating and pressurizing oil.

## Patentansprüche

1. Rad- und Reifenanordnung, wobei die Anordnung (10) mehrere Stützelemente (12) zum Stützen eines Teils einer Last eines Fahrzeugs und ein ringförmiges Scherband (13) umfasst, das sich in Umfangsrichtung um die Stützelemente (12) erstreckt, wobei das Scherband (13) eine radial innere Umfangsmembran (14), eine radial äußere Umfangsmembran (16) und eine Scherschicht (15) aufweist, die die innere Membran (14) und die äußere Membran (16) verbindet, **dadurch gekennzeichnet, dass** die Scherschicht (15) eine Struktur aufweist, die vor einem Einbau der Anordnung in ein Fahrzeug vorgespannt wird.

2. Anordnung nach Anspruch 1, wobei die Scherschicht (15) fluidabgedichtet ist.

3. Verfahren zum Vorspannen eines Teils einer Rad- und Reifenanordnung, wobei das Verfahren Folgendes umfasst:
Stützen eines Teils einer Last eines Fahrzeugs durch eine Struktur;
Erstrecken eines ringförmigen Scherbandes (13) in Umfangsrichtung um die Struktur;
Verbinden einer radial inneren Umfangsmembran (14) und einer radial äußeren Umfangsmembran (16) durch eine ringförmige Scherschicht (15); und
Vorspannen der ringförmigen Scherschicht (15) vor dem Einbau der Anordnung (10) in ein Fahrzeug.

4. Verfahren nach Anspruch 3, wobei der Vorspannungsschritt einen Aushärtungsschritt einschließt.

5. Verfahren nach Anspruch 3 oder 4, wobei der Vorspannungsschritt ein Verwenden eines inkompressiblen Fluids einschließt.

6. Verfahren nach Anspruch 3, 4 oder 5, wobei der Vorspannungsschritt ein Fluidabdichten der ringförmigen Scherschicht (15) einschließt.

7. Verfahren nach wenigstens einem der Ansprüche 3 bis 6, wobei der Vorspannungsschritt Wasser oder eine Druckbeaufschlagung mit Wasser einschließt.

8. Verfahren nach wenigstens einem der Ansprüche 3 bis 6, wobei der Vorspannungsschritt Öl oder die Druckbeaufschlagung mit Öl einschließt.

9. Verfahren nach wenigstens einem der Ansprüche 3 bis 6, wobei der Vorspannungsschritt ein Erhitzen und die Druckbeaufschlagung mit Öl einschließt.

## Revendications

1. Assemblage de roue et de bandage pneumatique, l'assemblage (10) qui comprend un certain nombre d'éléments de support (12) qui sont destinés à supporter une partie d'une charge d'un véhicule, de même qu'une bande de cisaillement de forme annulaire (13) qui s'étend dans la direction circonférentielle autour des éléments de support (12), la bande de cisaillement (13) possédant une membrane circonstancielle interne dans la direction radiale (14), une membrane circonférentielle externe dans la direction radiale (16) et une couche de cisaillement (15) qui relie l'une à l'autre la membrane interne (14) et la membrane externe (16), **caractérisé en ce que** la couche de cisaillement (15) possède une structure qui a été soumise à une mise en état de précontrainte avant le montage de l'assemblage sur un véhicule.

2. Assemblage tel qu'indiqué dans la revendication 1, dans lequel la couche de cisaillement (15) possède une étanchéité par rapport aux fluides.

3. Procédé de mise en état de précontrainte d'une partie d'un assemblage de roue et de bandage pneumatique, le procédé comprenant le fait de :
supporter une partie d'une charge d'un véhicule par l'intermédiaire d'une structure ;
étendre une bande de cisaillement annulaire (13) dans la direction circonférentielle autour de la structure ;
relier l'une à l'autre une membrane circonférentielle interne dans la direction radiale (14) et une membrane circonférentielle externe dans la direction radiale (16) par l'intermédiaire d'une couche de cisaillement annulaire (15) ; et
soumettre la couche de cisaillement annulaire (15) à une mise en état de précontrainte avant le montage de l'assemblage (10) sur un véhicule.

4. Procédé tel qu'indiqué dans la revendication 3, dans lequel l'étape de mise en état de précontrainte englobe une étape de vulcanisation.

5. Procédé tel qu'indiqué dans la revendication 3 ou 4, dans lequel l'étape de mise en état de précontrainte englobe le fait d'utiliser un fluide incompressible.

6. Procédé tel qu'indiqué dans la revendication 3, 4 ou 5, dans lequel l'étape de mise en état de précontrainte englobe le fait de rendre étanche aux fluides, la couche de cisaillement annulaire (15).

7. Procédé tel qu'indiqué dans au moins une des revendications 3 à 6, dans lequel l'étape de mise en état de précontrainte englobe de l'eau ou de l'eau qui a été mise sous pression.

8. Procédé tel qu'indiqué dans au moins une des revendications 3 à 6, dans lequel l'étape de mise en état de précontrainte englobe de l'huile ou de l'huile qui a été mise sous pression.

9. Procédé tel qu'indiqué dans au moins une des revendications 3 à 6, dans lequel l'étape de mise en état de précontrainte englobe le fait de chauffer de l'huile et de mettre cette dernière sous pression.
